# EUROPEAN PATENT APPLICATION

(11) **EP 1 493 627 A1**
(43) Date of publication of application: **05.01.2005**
(21) Application number: 04015398.3
(22) Date of filing: 30.06.2004
(51) Int. Cl.: B60R 11/02, H04R 1/02

(54) **Speaker device mounted to vehicle door and vehicle door**

(30) Priority: 30.06.2003 JP 2003187794
(71) Applicant: Pioneer Corporation, Meguro-ku, Tokyo (JP); Tohoku Pioneer Corporation, Tendo-shi, Yamagata (JP)
(72) Inventor: Ito, Takeshi, Oaza Kunomoto Tendo-shi Yamagata (JP); Onuma, Tetsuya, Oaza Kunomoto Tendo-shi Yamagata (JP); Endo, Nobuhiro, Oaza Kunomoto Tendo-shi Yamagata (JP)
(74) Representative: Reinhard - Skuhra - Weise & Partner GbR

(57) **Abstract**

A speaker unit (30) is fitted to a speaker-unit mounting hole of a baffle plate (21) provided with the speaker-unit mounting hole (22). The speaker unit (30) is fitted to at least one of service holes (13a,13b,13c,13d) provided in a door panel (12) (inner panel) of a door apparatus for a vehicle.

## Description

### BACKGROUND OF THE INVENTION

### 1. FIELD OF THE INVENTION

The present invention relates to a vehicle-mounted speaker device and a door apparatus.

### 2. DESCRIPTION OF THE RELATED ART

A door apparatus for a vehicle generally has a dual structure having an internal space for accommodating window glass, and is interiorly provided with a door panel (inner panel) for installing a mechanism for raising and lowering the window glass.

This door panel is provided with holes which are called service holes to make the door apparatus lightweight as a consequence of a demand for a lightweight vehicle, or to install a regulator in the door panel or pass wires therethrough. In addition, since a vehicle-mounted speaker device (front speaker or the like) is normally mounted in a front seat door, such a vehicle-mounted speaker device is mounted in the aforementioned service hole or an exclusive-use speaker unit mounting hole.

Hereafter, a description will be given with reference to the drawings by citing an example of installing the vehicle-mounted speaker device with respect to a conventional door panel.

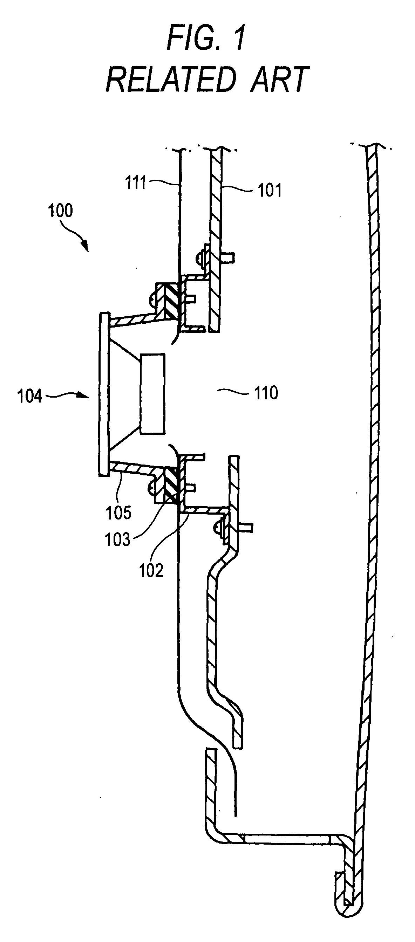

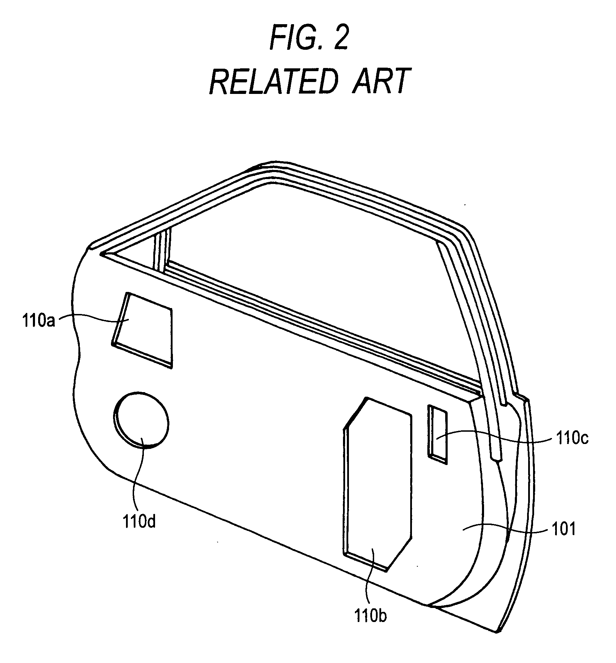

As shown in Fig. 1, in a vehicle-mounted speaker device 100, a speaker bracket 102 is fixed to a vehicle compartment side of a periphery of a service hole 110 provided in a door panel (inner panel) 101. A mounting flange 105 of a speaker unit 104 is fixed to a speaker mounting surface 103 of this speaker bracket 102 in a state in which a service hole cover 111 is interposed therebetween. Irrespective of the surface configurations of the door panel (inner panel) 101, flat surfaces of the speaker mounting surface 103 and the mounting flange 105 are secured, and their joining surfaces are brought into close contact with the service hole cover 111 at the time of installation, thereby enhancing the sealing characteristic (e.g., refer to JP-A-5-116570 (pp. 2 and 3, Fig. 2)).

As described above, the door panel (inner panel) 101 is provided with a plurality of service holes 110a, 110b, and 110c and a speaker unit mounting hole 110d for various purposes, as one example is shown in Fig. 2.

For this reason, the rigidity declines, so that the door panel 101 is likely to vibrate due to vibrations generated by the speaker unit 104. As a result, there arise problems in that the sound quality of the reproduced sound of the speaker deteriorates, and chattering noise occurs.

In addition, the structure is such that the noise from outside the vehicle (road noise etc. ) is likely to enter through the service holes 110a, 110b, and 110c and the speaker unit mounting hole 110d, so that there is a problem in that an adverse effect is exerted on the sound field in the vehicle.

### SUMMARY OF THE INVENTION

It is an object of the invention to provide with a vehicle-mounted speaker device and a door system to decrease in the sound quality of the reproduced sound, the occurrence of chattering noise, and the exertion of an adverse effect on the sound field in the vehicle due to the entry of noise from outside the vehicle (road noise etc.).

According to first aspect of the invention, there is provided a vehicle-mounted speaker device including: a door panel of a vehicle having a hole; a speaker unit mounted on a door panel of a vehicle; and a baffle plate fitted to the hole, and having a speaker-unit mounting hole for mounting the speaker unit, wherein the speaker unit is fitted to the speaker-unit mounting hole.

According to second aspect of the invention, there is provided a door apparatus for a vehicle including: a door panel of the vehicle having a plurality of holes; a speaker unit; and a baffle plate having a speaker-unit mounting hole for mounting the speaker unit, wherein the baffle plate is fitted to at least one of the plurality of holes.

### BRIEF DESCRIPTION OF THE DRAWINGS

These and other objects and advantages of this invention will become more fully apparent from the following detailed description taken with the accompanying drawings in which:
Fig. 1 is a cross-sectional view illustrating a conventional vehicle-mounted speaker device;
Fig. 2 is a front elevational view illustrating a conventional door panel;
Fig. 3 is a front elevational view illustrating an embodiment of the vehicle-mounted speaker device and the door apparatus in accordance with the invention;
Fig. 4 is an enlarged view of essential portions illustrating the embodiment of the vehicle-mounted speaker device in accordance with the invention;
Fig. 5A is a cross-sectional view, taken along line V - V in Fig. 4, of the vehicle-mounted speaker device; and
Figs. 58 and 5C are cross-sectional views illustrating the construction of a baffle plate.

### DESCRIPTION OF THE PREFERRED EMBODIMENTS

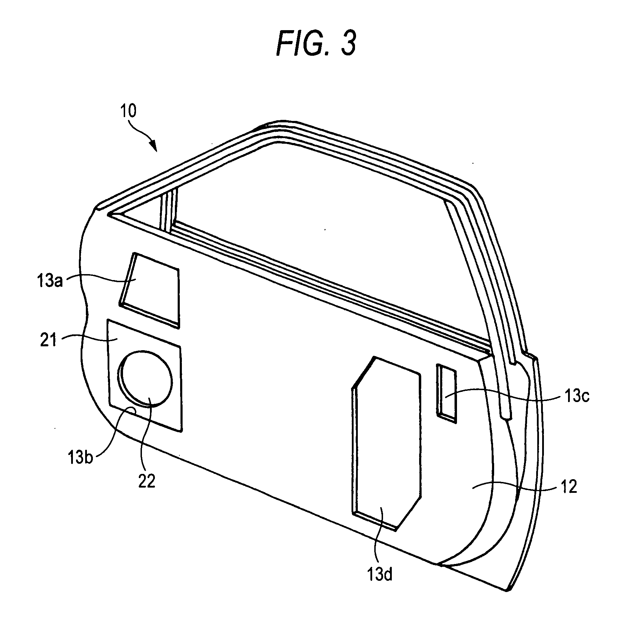

Referring now to Figs. 3 to 5, a description will be given of an embodiment of a vehicle-mounted speaker device and a door apparatus in accordance with the invention.

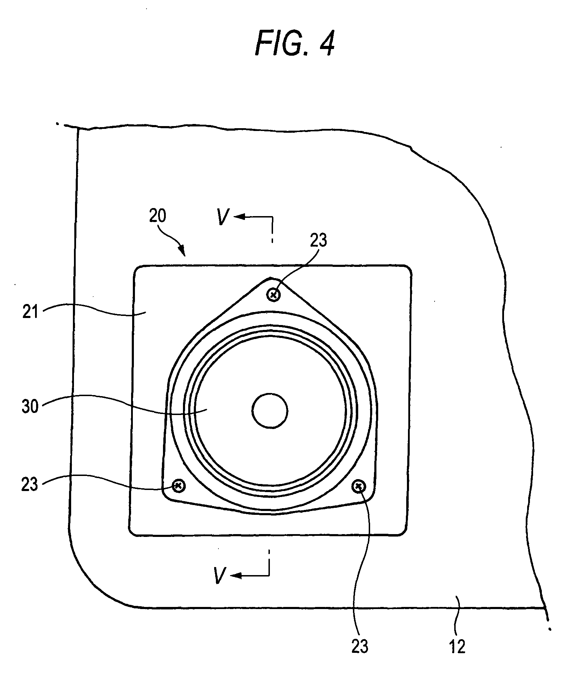

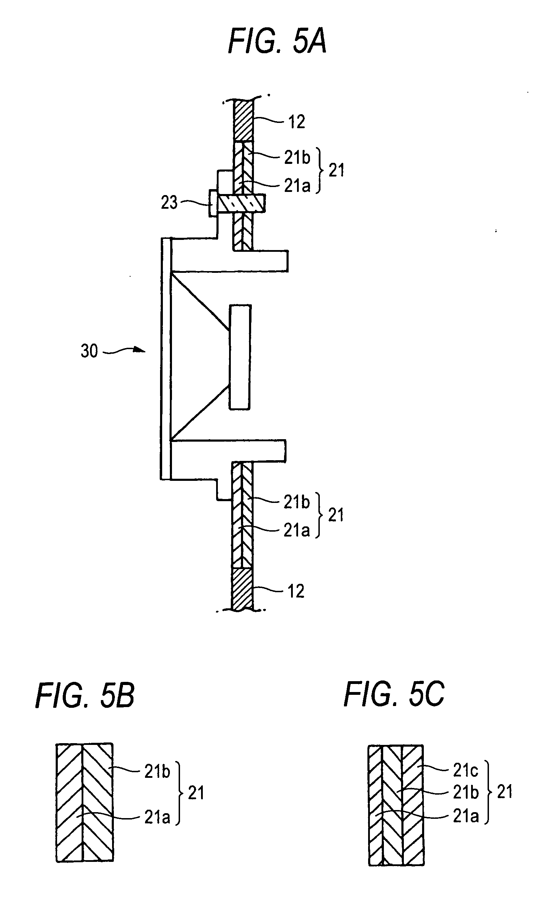

Fig. 3 is a perspective view illustrating a door apparatus in accordance with the embodiment of the invention. Fig. 4 is a plan view of the vehicle-mounted speaker device in accordance with the invention. Fig. 5A is a cross-sectional view taken along line V - V in Fig. 4, and Figs. 5B and 5C are cross-sectional views of a baffle plate.

A door apparatus 10 is for vehicle use, and a door panel (inner panel) 12 on its inner side is provided with service holes 13a, 13b, 13c, and 13d which are a plurality of (in this case, for example, four) holes, as shown in Fig. 3.

In addition, as shown in Fig. 4, as for a vehicle-mounted speaker device 20, a baffle plate 21 having a size and a shape (here, a rectangular shape, for example) forcompletelycovering the service hole 13b is fitted to the service hole 13b (see Fig. 3) at a position for installing a speaker unit 30, in such a manner as to be substantially flush with the door panel 12.

It should be noted that a speaker-unit mounting hole 22 (see Fig. 3) for mounting the speaker unit 30 is provided in the baffle plate 21. The speaker unit 30 is fitted to this speaker-unit mounting hole 22, and is fixed by screws 23 (three screws 23 in the example shown in Fig. 4) or the like.

As the baffle plate 21, a plate formed of a material which absorbs or damps unwanted vibrations of the door panel 12 is used. Namely, as its material, it is possible to cite by way of example an aluminum die casting or a magnesium alloy die castingwhose internal loss is large, a silicone resin (a generic name of polymers of organic silicides) for absorbing vibrations, and a resin exhibiting a loss coefficient tan. of 0.03 or greater.

In addition, as shown in Fig. 5A, the baffle plate 21 may have a (multilayered) structure which does not transmit or makes it difficult to transmit to the door panel 12 vibrations generated by the speaker unit 30.

Namely, as shown in Fig. 5B, it is possible to illustrate by way of example a baffle plate in which, as shown in Fig. 5B, a damping material 21b (one or more) is adhered to the aforementioned plate 21a (of a material which absorbs or damps unwanted vibrations of the door panel 12), or a baffle plate in which, as shown in Fig. 5C, the damping material 21b is sandwiched by the plates 21a and 21c.

It should be noted that, as the damping material 21b, it is possible to cite by way of example an aluminum die casting or a magnesium alloy die casting whose internal loss is large, a silicone resin (a generic name of polymers of organic silicides) for absorbing vibrations, and a resin exhibiting a loss coefficient tan. of 0.03 or greater.

To install the above-described vehicle-mounted speaker device 20 in the door apparatus 10, the baffle plate 21 is provided in advance with the speaker-unit mounting hole 22 for mounting the speaker unit 30 on the baffle plate 21. Then, the baffle plate 21 is fitted to one service hole 13b of the plurality of service holes 13a, 13b, 13c, and 13d provided in the door panel 12, in such a manner as to be substantially flush with the door panel 12.

At this time, the baffle plate 21 may be attached directly to the door panel 12, but in a case where the service hole 13b is larger than the baffle plate 21, the baffle plate 21 may be attached thereto by means of an attaching member or the like, as required.

Then, the speaker unit 30 is fitted to the speaker-unit mounting hole 22 provided in the baffle plate 21, and the speaker unit 30 is fixed to the baffle plate 21 by a fastening means such as screws 23 or rivets.

As the baffle plate 21 is fitted in such a manner as to be substantially flushwith the door panel 12 as described above, it is possible to reduce the road noise by improving the rigidity of the door panel 12.

Further, as for the baffle plate 21, it is possible to use one which absorbs or dampens unwanted vibrations of the door panel 12 or adopt a structure which does not transmit or makes it difficult to transmit to the door panel 12 vibrations generated by the speaker unit 30.

Consequently, since it is possible to reduce unwanted vibrations transmitted to the door panel 12, it is possible to improve the sound quality of the reproduced sound of the speaker and reduce chattering noise.

It should be noted that the vehicle-mounted speaker device and the door apparatus in accordance with the invention are not limited to the above-described embodiment, and appropriate modifications, improvements, and the like are possible.

For example, although in the above-described embodiment a description has been given of the case where the rectangular baffle plate 21 is fitted to the rectangular service hole 13b, the shape of the baffle plate is not particularly limited. Accordingly, the hole may not be an exclusive-use speaker mounting hole, and the baffle plate 21 can be adjusted to the shape and size of the service hole which is provided in a predetermined shape without limiting its usage. Further, the shape and size of the speaker mounting hole can also be adjusted to the diameter and shape (circular shape, elliptical shape, etc.) of the speaker unit to be installed.

In addition to the speaker device already provided, it is also possible to install an additional speaker device by fitting a baffle plate to another service hole. Further, it is also possible to fit respective baffle plates to a plurality of service holes.

Further, a plurality of speaker mounting holes may be provided in one baffle plate, and a plurality of speaker units such as a low-range speaker unit and a high/mid-range speaker unit may be combined and fitted thereto.

In addition, the materials and the like of such as the plates 21a and 21c and the damping material 21b illustrated in the above-described embodiment are arbitrary insofar as they are capable of attaining the invention, and are not limited.

As described above, a vehicle-mounted speaker device in accordance with this embodiment comprises: the baffle plate 21 which is fitted to the hole (service hole 13b) formed in the door panel 12, the baffle plate 21 has the speaker-unit mounting hole 22 formed therein for mounting the speaker unit 30, and the speaker unit 30 is fitted to the speaker-unit mounting hole 22.

In addition, the door apparatus 10 is the door apparatus 10 for a vehicle provided with the plurality of holes (service holes 13a, 13b, 13c, and 13d) in the door panel 12. The baffle plate 21 having the speaker-unit mounting hole 22 formed therein for mounting the speaker unit 30 is fitted to at least one of the plurality of holes (service holes 13a, 13b, 13c, and 13d).

Consequently, it is possible to reduce unwanted vibrations transmitted to the door panel 12, thereby making it possible to improve the sound quality inside the vehicle and reduce chattering noise. At the same time, the structure adopted is such that noise from outside the vehicle (road noise etc.) is difficult to enter, making it possible to prevent an adverse effect from being exerted on the sound field in the vehicle.

The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto, and their equivalents.

## Claims

1. A vehicle-mounted speaker device comprising:
a door panel of a vehicle having a hole;
a speaker unit mounted on the door panel; and
a baffle plate fitted to the hole and having a speaker-unit mounting hole for mounting the speaker unit,
wherein the speaker unit is fitted to the speaker-unit mounting hole.

2. A vehicle-mounted speaker device according to claim 1, wherein the hole is closed as the baffle plate is fitted to the hole.

3. A vehicle-mounted speaker device according to any one of claims 1 and 2, wherein the baffle plate is formed of a material which absorbs or damps an unwanted vibration of the door panel.

4. A vehicle-mounted speaker device according to any one of claims 1 to 3, wherein the baffle plate has a structure which does not transmit or makes it difficult to transmit to the door panel a vibration generated by the speaker unit.

5. A vehicle-mounted speaker device according to any one of claims 1 to 4, wherein the baffle plate is fitted substantially flush with the door panel.

6. A door apparatus for a vehicle comprising:
a door panel of the vehicle having a plurality of holes;
a speaker unit; and
a baffle plate having a speaker-unit mounting hole for mounting the speaker unit,
wherein the baffle plate is fitted to at least one of the plurality of holes.

7. A door apparatus according to claim 6, wherein the hole is closed as the baffle plate is fitted to the hole.

8. A door apparatus according to any one of claims 6 and 7, wherein the baffle plate is formed of a material which absorbs or damps an unwanted vibration of the door panel.

9. A door apparatus according to any one of claims 6 to 8, wherein the baffle plate has a structure which does not transmit or makes it difficult to transmit to the door panel a vibration generated by the speaker unit.

10. A door apparatus according to any one of claims 6 to 9, wherein the baffle plate is fitted substantially flush with the door panel.
